# EUROPEAN PATENT SPECIFICATION

(11) **EP 4 203 704 B1**
(45) Date of publication and mention of the grant of the patent: **18.02.2026**
(21) Application number: 21778625.0
(22) Date of filing: 31.08.2021
(51) Int. Cl.: A23L 5/46, A23L 11/00

(54) **PIGMENT FOR MEAT SUBSTITUTE COMPOSITIONS**
PIGMENT FÜR FLEISCHERSATZZUSAMMENSETZUNGEN
PIGMENT POUR COMPOSITIONS DE SUBSTITUT DE VIANDE

(30) Priority: 31.08.2020 US 202063072287 P
(43) Date of publication of application: 05.07.2023
(73) Proprietor: Cargill, Incorporated, Wayzata, Minnesota 55391 (US)
(72) Inventor: HERMES, Tasha, Maple Grove, Minnesota 55311 (US); LIPKIE, Tristan, Maple Grove, Minnesota 55369 (US); SHYAMALIE SENARATNE-LENAGALA, Lasika, Wichita, Kansas 67205 (US)
(74) Representative: Cargill IP Department
(86) International application number: PCT/US2021/048465
(87) International publication number: WO 2022/047389

(56) References cited:
- WO-A1-2020/089445
- WO-A1-2020/102673
- WO-A1-2021/022082
- WO-A1-2021/195708
- WO-A1-2022/043059
- WO-A2-2008/083117
- CN-A- 107 827 962
- US-A1- 2015 305 390
- JINDONG ZHAO: "Specific bleaching of phycobiliproteins from cyanobacteria and red algae at high temperature in vivo", ARCHIVES OF MICROBIOLOGY, vol. 152, no. 5, 1 October 1989 (1989-10-01), Berlin/Heidelberg, pages 447 - 452, XP093154223, ISSN: 0302-8933, DOI: 10.1007/BF00446927
- HSIEH-LO MING ET AL: "Phycocyanin and phycoerythrin: Strategies to improve production yield and chemical stability", ALGAL RESEARCH, vol. 42, 1 September 2019 (2019-09-01), NL, pages 1 - 11, XP055830323, ISSN: 2211-9264, DOI: 10.1016/j.algal.2019.101600
- MYSLIWA-KURDZIEL BEATA ET AL: "Phycobilins and Phycobiliproteins Used in Food Industry and Medicine", MINI-REVIEWS IN MEDICINAL CHEMISTRY, vol. 17, no. 13, 31 July 2017 (2017-07-31), NL, XP093216866, ISSN: 1389-5575, DOI: 10.2174/1389557516666160912180155
- SMITH S. E. ET AL: "R-Phycoerythrin as a Time-Temperature Integrator To Verify the Thermal Processing Adequacy of Beef Patties", JOURNAL OF FOOD PROTECTION, vol. 65, no. 5, 1 May 2002 (2002-05-01), US, pages 814 - 819, XP055972611, ISSN: 0362-028X, DOI: 10.4315/0362-028X-65.5.814
- MUNIER MATHILDE ET AL: "Physicochemical factors affecting the stability of two pigments: R-phycoerythrin of Grateloupia turuturu and B-phycoerythrin of Porphyridium cruentum", FOOD CHEMISTRY, ELSEVIER LTD, NL, vol. 150, 1 November 2013 (2013-11-01), pages 400 - 407, XP028804121, ISSN: 0308-8146, DOI: 10.1016/J.FOODCHEM.2013.10.113
- BENJAMIN M. BOHRER: "An investigation of the formulation and nutritional composition of modern meat analogue products", FOOD SCIENCE AND HUMAN WELLNESS, vol. 8, no. 4, 1 December 2019 (2019-12-01), pages 320 - 329, XP093154129, ISSN: 2213-4530, DOI: 10.1016/j.fshw.2019.11.006
- CHAYAKORN PUMAS: "Thermostablility of phycobiliproteins and antioxidant activity from four thermotolerant cyanobacteria", PHYCOLOGICAL RESEARCH, vol. 59, no. 3, 28 June 2011 (2011-06-28), AU, pages 166 - 174, XP093154127, ISSN: 1322-0829, DOI: 10.1111/j.1440-1835.2011.00615.x
- DINESHBABU GNANASEKARAN ET AL: "Microalgae-nutritious, sustainable aqua- and animal feed source", JOURNAL OF FUNCTIONAL FOODS, ELSEVIER BV, NL, vol. 62, 3 September 2019 (2019-09-03), XP085856068, ISSN: 1756-4646, [retrieved on 20190903], DOI: 10.1016/J.JFF.2019.103545
- DATABASE GNPD [online] MINTEL; 10 February 2016 (2016-02-10), ANONYMOUS: "Porphyra Seaweed Soup", XP055874986, retrieved from https://www.gnpd.com/sinatra/recordpage/3783951/ Database accession no. 3783951

## Description

### CROSS-REFERENCE TO RELATED APPLICATIONS

This application claims priority to U.S. provisional patent application no. 63/072,287, filed 31 August 2020.

### BACKGROUND

Myoglobin is a protein that is the primary oxygen carrying compound in animal muscle tissue. Myoglobin includes a heme group that binds oxygen via iron. Myoglobin is also the compound primarily responsible for the color of red meat. For example, raw, fresh beef has a pink or red color due to the iron atom in myoglobin being in the ferrous (+2) oxidation state and bound to oxygen. When the beef is cooked, the color turns brown due to the iron atom moving to the ferric (+3) oxidation state and releasing oxygen.

Demand for plant-based meat substitutes is increasing for a variety of reasons. Many consumers prefer meat substitute options that perform most similarly to animal meat, including wanting the color of the meat substitute to be comparable to animal meat color before and after cooking. Accordingly, there is a need for a pigment that can provide color to a meat substitute that is the same or similar to that of natural animal meat. A pigment derived from plant sources that can transition in color when the meat substitute is cooked is particularly desirable.

US 2015/305390 discloses meat replicas containing visual indicators for progressing from red to brown.

### SUMMARY

Disclosed herein are pigments useful for meat substitute The disclosure relates to a pigment composition used in a meat substitute, comprising: 0.01-1% by weight (dry basis) phycoerythrin for increasing the red color of a raw or uncooked meat substitute.

In an aspect, the red color of the composition is decreased when heated to a temperature of at least 80°C for 90 seconds. In an aspect, the red color of the composition is substantially decreased when diluted 1: 10 with water and heated on a hot plate set at 130°C for 90 seconds.

In an aspect, at least 50% of the Phycoerythrin degrades when heated to a temperature of 80°C for at least 4 min, as indicated by absorption at maximum wavelength. In an aspect, at least 75% of the Phycoerythrin degrades when heated to a temperature of 80°C for at least 10 min, as indicated by absorption at maximum wavelength. In an aspect, the degradation of the Phycoerythrin decreases the red color of the pigment composition. In an aspect, the degradation of the Phycoerythrin decreases the red color of the pigment composition corresponding to a decrease in the a* value of L*a*b* colorimetry of at least 5, 10, 15, 20, 25, 30, 35, 40, 45, or 50%.

In an aspect, the pigment composition comprises R-Phycoerythrin. In an aspect, the pigment composition comprises B-Phycoerythrin. In an aspect, the pigment composition comprises R-Phycoerythrin and B-Phycoerythrin. In an aspect, the pigment composition comprises b-Phycoerythrin. In an aspect, the pigment composition comprises C-Phycoerythrin. In an aspect, the pigment composition comprises R-Phycoerythrin, B-Phycoerythrin, b-Phycoerythrin, C-Phycoerythrin and any combination or mixture thereof.

In an aspect, the present disclosure relates to a meat substitute comprising: non-meat protein, and pigment composition comprising Phycoerythrin. The brown color of the meat substitute increases and the red color of the meat substitute decreases after cooking. In an aspect, the non-meat protein is a plant-based protein selected from the group consisting of pea protein, soy protein, and wheat protein. In an aspect, the non-meat protein comprises mycoprotein.

In an aspect, the present disclosure relates to a method for increasing the red color of a meat substitute, comprising: adding a pigment composition comprising Phycoerythrin to a meat substitute prior to cooking the meat substitute. In an aspect, the method is a method for improving the color of a meat substitute, comprising: adding a pigment composition comprising Phycoerythrin to a meat substitute prior to cooking the meat substitute. In an aspect, the pigment composition used in the method is any of the pigment compositions comprising Phycoerythrin described herein.

The composition, meat substitute, or method described herein includes a pigment composition that comprises red algae. The red algae is selected from the group consisting of *Porphyridium cruentum, Porphyra tenera, Gastroclonium coulteri, Corallina elongate, Phyllophora antarctica, Iridaea cordata,* and mixtures thereof. In an aspect, the red algae extract is unpurified.

The pigment composition comprises at least 50%, 60%, 70%, 80%, 85%, 90%, 95%, or 99% Phycoerythrin on a dry weight basis.

### BRIEF DESCRIPTION OF THE FIGURES

The drawings illustrate generally, by way of example, various embodiments discussed in the present document.
FIG. 1 is a photo image showing four beakers containing meat or meat substitutes after cooking (from left to right): beef; meat substitute with betanin pigment at 0.5% inclusion; meat substitute with Phycoerythrin pigment at 0.025% inclusion; and meat substitute with Phycoerythrin pigment at 0.008% inclusion.
FIG. 2 is a set of photo images showing samples of beef extract or pigment samples that are diluted with water. In FIGS. 2A and 2B: beef extract (left in each photo) and R-Phycoerythrin (0.35 mg/mL) (right in each photo) samples are shown. A: raw samples in water, and B: samples from A after heating on a hot plate set at 130°C for 2 minutes. In FIGS. 2C and 2D: beet juice extract (7 mg/mL) (left in each photo) and betanin (7 mg/mL) (right in each photo are shown). C: raw samples in water, and D: samples from C after heating on a hot plate set at 130°C for 2 minutes.
FIG. 3 is a set of graphs showing visible light absorption spectra taken every 30 seconds for 10 minutes for A: R-phycoerythrin in water, heated at 80 C, and B: betanin from beet extract heated at 80 C.
FIG. 4 is a set of photo images and visible light reflectance by Hunter Colorimetry graph showing: A: raw beef; B: cooked beef: and C: visible light reflectance curves for both raw and cooked beef.
FIG. 5 is a set of photo images and a visible light reflectance graph showing: A: raw meat substitute including betanin; B: cooked meat substitute including betanin: and C: visible light reflectance curves for both raw and cooked meat substitute including betanin.
FIG. 6 is a set of photo images and a visible light reflectance graph showing: A: raw meat substitute including Phycoerythrin (0.025% inclusion); B: cooked meat substitute including Phycoerythrin: and C: visible light reflectance curves for both raw and cooked meat substitute including Phycoerythrin.
FIG. 7 is set of photo images and a visible light reflectance graph showing: A: raw meat substitute including Phycoerythrin (at 0.008% inclusion); B: cooked meat substitute including Phycoerythrin: and C: visible light reflectance curves for both raw and cooked meat substitute including Phycoerythrin.
FIG. 8 is a visible light absorption graph (A) and photo image (B) showing a comparison of R-Phycoerythrin and beet juice extract. In the photo image (B), the left vial for each sample is 1x (undiluted), and the right vial for each sample is diluted 1:10 with water.
FIG. 9 is a photo image showing: a cooked meat substitute including R-phycoerythrin (A) and a cooked meat substitute including beet juice extract (B).

### DETAILED DESCRIPTION

Disclosed herein are pigments useful for meat substitute compositions. The pigment includes Phycoerythrin. Phycoerythrin is a red protein-pigment complex produced by red algae that is used as part of a photosynthetic light-harvesting mechanism. The pigment can be used to provide a red and/or pink color to uncooked meat substitutes, which transitions to a less-red or brown color during cooking. Accordingly, the pigment is used to produce meat substitute compositions that have a color and color performance similar to natural animal meats, particularly beef, lamb, and other red meats. In an aspect, the pigment can also be used with pork, chicken or other "white meat" substitutes wherein the meat substitute changes from a pink color in the raw state to a less-pink or white color after cooking.

Unless defined otherwise, all technical and scientific terms used herein have the same meaning as commonly understood by one skilled in the art to which this invention belongs. As used herein, each of the following terms has the meaning associated with it as defined below.

As used herein, the terms "meat substitute," "meat substitute composition" "alternative protein composition," "meat analogue," "meat alternative," "meat alternative composition," and the like refer to compositions that try to mimic the general appearance, nutritional content, and/or taste of natural animal meat or meat compositions without containing naturally-occurring animal muscle cells or other types of animal cells typically associated with natural animal meat. The terms "meat substitutes" and the like refer to a composition that includes plant-based or fungal-based meat substitutes, such as those based on pea protein, soy protein, wheat protein, chickpeas, or other types of plant proteins or mixtures of plant proteins, and/or those based on mushrooms or other fungal sources. The terms "meat substitute" and the like also include cell-based meat substitutes, i.e., compositions based on animal cells that are produced via fermentation, cell cultures, or other artificial methods. The terms "meat substitute" and the like also include compositions based on insect protein. The terms "meat substitute" and the like also include hybrid compositions that contain a combination of plant-based, insect-based, and/or fungal-based protein in combination with animal cells, including cultured animal cells (i.e., cell-based meat).

As used herein, the term "non-meat protein" refers to protein sourced from plants, fungus, insects, or cultured animal cells.

As used herein, the term "Phycoerythrin" refers to a composition that includes R-Phycoerythrin, B-Phycoerythrin, b-phycoerythrin, C-phycoerythrin, Phycoerythrin 545, and/or any other phycoerythrin composition that includes a significant amount of chromophore content, and mixtures thereof. In an aspect, "Phycoerythrin" refers to any composition containing Phycoerythrobilin.

Described herein is a pigment composition containing Phycoerythrin, and meat substitutes including such a pigment composition. The pigment composition disclosed herein is used to provide color to a meat substitute that is similar to the color of natural animal meat. In an aspect, the pigment composition provides a pink and/or red color to raw, uncooked meat substitute that transitions to a brown, white, colorless, or less red color after cooking the meat substitute. Accordingly, the pigment composition changes color upon heating and can provide an overall color change to the entire meat substitute composition that mimics the effects of cooking on natural animal meat.

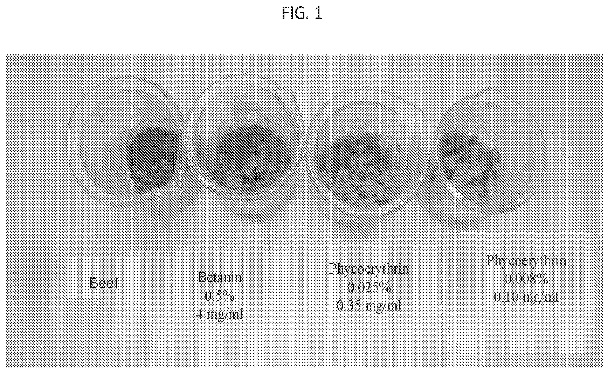

Referring now to FIG. 1, a series of cooked beef or cooked meat substitutes is shown. The cooked beef sample is brown in color while the cooked meat substitute containing betanin (the primary red component of beet juice extract) is still pink in color (similar to the raw color). However, the cooked meat substitutes containing Phycoerythrin (at different inclusion levels) both show greatly reduced or eliminated pink color while also exhibiting improved brown color over the betanin sample. The Phycoerythrin itself loses its pink or red color as it is cooked due to degradation and may become colorless if enough degradation occurs. Accordingly, the brown color of a cooked meat substitute is not necessarily due to the Phycoerythrin turning brown in color, but instead due to the Phycoerythrin losing its reddish color. The degraded Phycoerythrin in the cooked meat substitute no longer masks the other colors of the meat substitute and the brown colors associated with Maillard reactions in the meat substitute become more apparent.

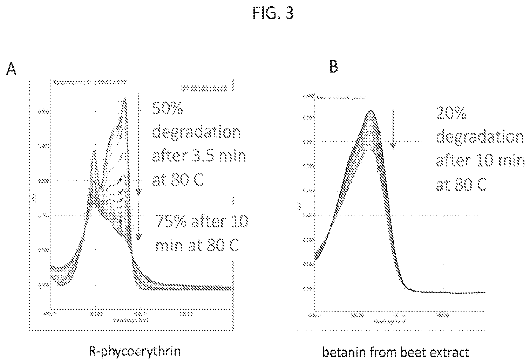

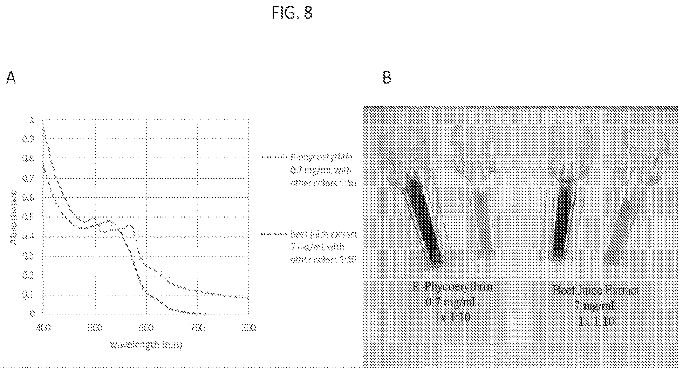

In an aspect, the redness of the pigment composition is reduced substantially or eliminated when heated to a temperature within a range typically used for cooking meat. In an aspect, the pigment composition changes from a pink and/or red color to a less-pink/red color or becomes substantially colorless when diluted 1:10 with water and 1 mL of that solution or slurry is heated on a hot plate set at 130°C for 90 seconds. In an aspect, the pigment composition can be used to change the color of a meat substitute from a pink and/or red color to a brown color and/or less pink/red color, as exhibited by diluting a meat substitute including the pigment composition 1:10 with water and then heating 1 mL of that solution or slurry to a temperature of 130 °C for 90 seconds. In an aspect, the changes in color of a pigment composition sample can be measured using a Hunter Calorimeter and reported as a relative percent change in visible light absorbance after heating as compared to the sample prior to heating (e.g., by using absorbance peaks in the range of 555-575 nm and 490-510 nm as shown in FIGS. 3A and 8A).

The pigment composition is included in a meat substitute at a level that provides increased or improved pink and/or red color in the raw meat substitute, while also providing increased or improved brown color in the meat substitute after cooking. In an aspect, the pigment composition is used at a level of at least 0.001%, 0.005%, 0.01%, 0.02%, 0.03%, 0.04%, or 0.05% on a wet (total) weight basis in a meat substitute composition. In an aspect, the pigment composition is used at a level in the range of 0.001 to 2%, 0.001 to 1%, 0.01 to 1%, 0.01 to 0.05%, 0.02% to 0.8%, 0.02 to 0.05%, 0.03 to 0.04%, or 0.1 to 1% by weight in a meat substitute composition.

Phycoerythrin can be obtained from red algae (e.g., but not limited to *Porphyridium cruentum, Porphyra tenera, Gastroclonium coulteri, Corallina elongate, Phyllophora antarctica, Iridaea cordata)* via methods known in the art (see, e.g., Hsieh-Lo, et al. (2019) Algal Research 42 , 101600; Rossano, et al. Journal of Biotechnology 101 (2003) 289-293; MacColl, et al. (1996) Journal of Biological Chemistry 271 (29) 17157-17160; and Hilditch, et al. (1991) Journal of Applied Phycology. 3: 345 -354). For example, Phycoerythrin can be obtained by grinding the algae, extracting Phycoerythrin using a phosphate buffer, and then purifying the Phycoerythrin via chromatography. Samples of purified Phycoerythrin, including R-Phycoerythrin and B-Phycoerythrin, can be obtained commercially from Sigma-Aldrich. The pigment composition described herein can comprise purified Phycoerythrin having a purity of 99% or greater, lower purity extracts of red algae that contain Phycoerythrin (i.e., less than 99% Phycoerythrin), or any other composition having an amount of Phycoerythrin suitable for use in adding pigmentation to meat substitutes. The pigment composition may also contain other pigments in addition to Phycoerythrin, especially pigments that are typically present in red alga, for example astaxanthin, phycocyanin, and/or chlorophyll.

The pigment composition described herein can be used as a pigment in any meat substitute composition. An exemplary, but non-limiting, meat substitute composition is a composition which comprises: plant protein (e.g., textured pea protein and/or pea protein), water, vegetable oil, flavor ingredients, salt, sugar, binders, and the pigment composition described herein.

### EXAMPLES

The invention is further described in detail by reference to the following experimental examples. These examples are provided for purposes of illustration only. (Parts of) Examples that do not fall within the scope of the claimed invention are to be interpreted as generally illustrative and/or comparative to the claimed invention.

### Example 1: Degradation of phycoerythrin

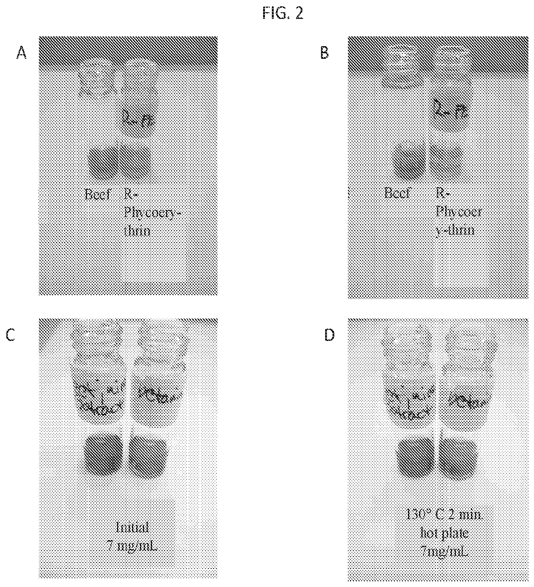

Samples of 25% aqueous beef extract (obtained from Cargill), 0.025% R-phycoerythrin (obtained from Sigma-Aldrich), and 0.5% betanin (obtained from Sigma-Aldrich) were mixed with water and heated on a hot plate. FIG. 2 shows a photo comparison of the beef and R-phycoerythrin samples before (A) and after (B) cooking by heating 1 mL on hot plate set at 130°C for 2 min. The R-phycoerythrin sample shows significant loss of pink/red color. In comparison, FIG. 2 further shows a photo comparison of 7 mg/mL beet juice extract and betanin samples before (C) and after (D) cooking by heating 1 mL on hot plate set at 130 C for 2 min. The beet juice extract and betanin samples show little to no change in pink/red color. FIG. 3 shows visible light absorption data for both R-phycoerythrin and betanin. The R-phycoerythrin shows ~50% degradation after 3.5 min and -75% degradation after 10 min, while betanin shows only ~20% degradation after 10 min. Accordingly, R-phycoerythrin is more suitable for an application where a color change based on degradation is desirable.

### Example 2: Pigment compositions for meat substitutes and comparison with beef in tiny patty test

R-phycoerythrin was used at two inclusion levels (0.025% and 0.008%, wet weight basis), betanin was used at a 0.5% inclusion level in a meat substitute patty, and a fourth patty was made with beef (25% aqueous beef extract) for comparison. The meat substitute was made from texturized pea protein, pea protein, water, and pigment. Each patty was cooked for 90 seconds at 130°C, stirring halfway, on a temperature controlled hot plate.

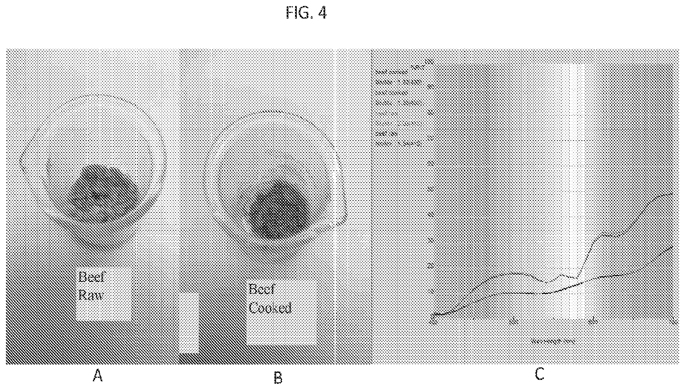

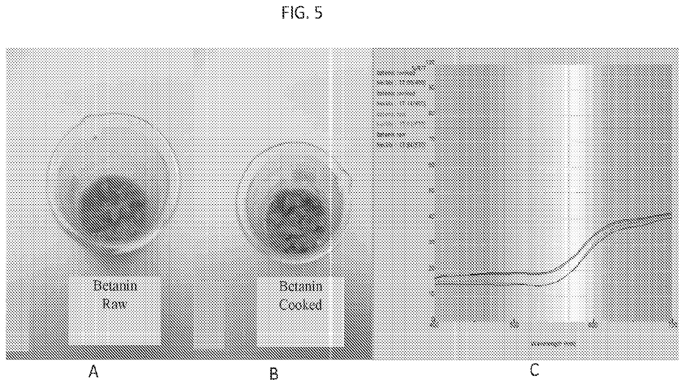

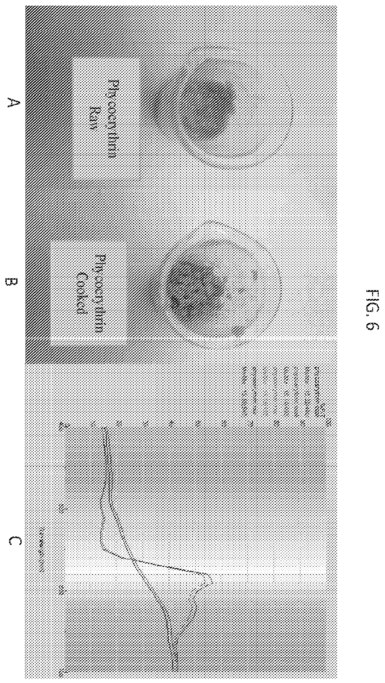

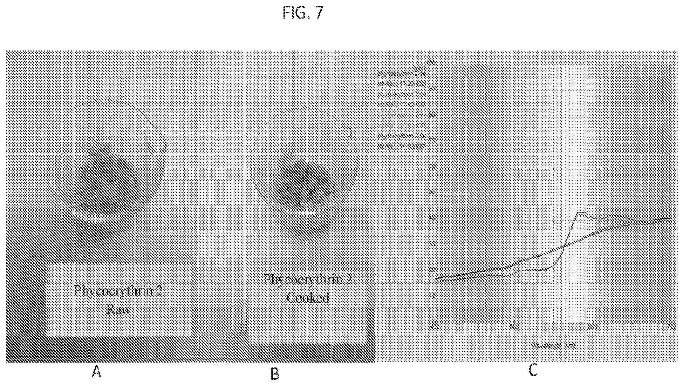

FIG. 1 shows the direct comparison of beef with the meat substitutes containing pigments after cooking. FIGS. 4-7 show the comparison between raw and cooked meat substitutes for each of the four samples (both photos and visible light reflectance spectra data).

The raw meat substitutes containing R-phycoerythrin showed similar red/pink color to both the raw beef and raw meat substitute containing betanin. However, both R-phycoerythrin-containing meat substitutes show decreased red color after cooking compared to the betanin-containing meat substitute, as indicated by greater reflection of green light at 520-560 nm.

### Example 3: Phycoerythrin comparison with beet juice extract as pigment for meat substitutes

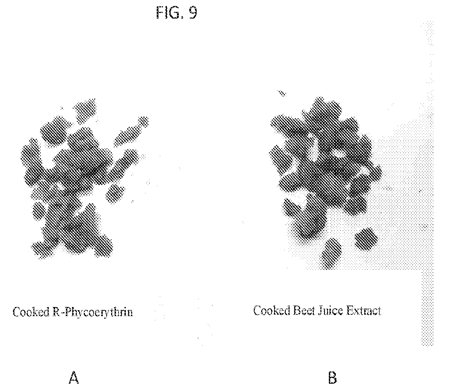

R-phycoerythrin (Sigma Aldrich) is compared with unmodified beet juice (Sensient) as a pigment for meat substitutes both before and after cooking. A concentration of 0.7 mg/mL R-phycoerythrin shows a similar color to beet juice extract at a concentration of 7 mg/mL in the raw state (FIG. 8). After cooking, R-phycoerythrin shows a higher degree of degradation from red to brown color compared to beet juice extract (FIG. 9).

Table 1 shows colorimetry data for both unmodified beet juice and phycoerythrin in a raw state and after cooking. Samples are cooked according to the following procedure: dissolve beet juice extract or phycoerythrin in water, add textured pea protein and stir, let sit 10 minutes, add water and pea protein powder and stir, let sit 10 minutes, place on a hot plate maintained at 130 C for 2 min, stirring every 30 seconds. Colorimetry data obtained using a HunterLab Lab Scan XE reflectance colorimeter with 0.5 inch aperture. The "delta" is the difference between raw and cooked colorimetry data. The a* values relate to redness.

**Table 1: colorimetry**

| | raw | | | | | cooked | | | | | delta | | | | |
|---|---|---|---|---|---|---|---|---|---|---|---|---|---|---|---|
| | L* | **a*** | b* | C* | h | L* | **a*** | b* | C* | h | L* | **a*** | b* | C* | h |
| beet juice unmodified 7 mg/mL | 33.1 | **19.3** | 14.6 | 24.2 | 37.1 | 34.4 | **13.4** | 12.4 | 18.3 | 42.8 | 1.3 | **-5.9** | -2.2 | -5.9 | 5.8 |
| R-phycoerythrin 0.7 mg/mL | 36.3 | **19.8** | 19.9 | 28.0 | 45.1 | 33.4 | **10.6** | 12.8 | 16.6 | 50.3 | -2.8 | **-9.2** | -7.1 | -11.5 | 5.3 |

R-phycoerythrin shows a similar a* value to beet juice in the raw form. However, R-phycoerythrin shows a greater decrease in a* value after cooking, which demonstrates that R-phycoerythrin exhibits greater degradation to a brown color after cooking compared to beet juice. Accordingly, R-phycoerythrin has a better color performance than beet juice for meat substitute applications.

## Claims

1. A meat substitute composition comprising:
a non-meat protein, and
0.01 to 1% by weight (dry basis) of a pigment composition comprising Phycoerythrin, wherein the pigment composition provides a red color to the meat substitute prior to cooking that is decreased after cooking;
wherein the Phycoerythrin is obtained from red algae selected from the group consisting of Porphyridium cruentum, Porphyra tenera, Gastroclonium coulteri, Corallina elongate, Phyllophora antarctica, Iridaea cordata, and mictures thereof;
and wherein the pigment composition comprises at least 50%, 60%, 70%, 80%, 85%, 90%, 95%, or 99% Phycoerythrin on a dry weight basis.

2. The meat substitute composition of claim 1, wherein the cooking degrades the Phycoerythrin and decreases a red color of the pigment composition corresponding to a decrease in the a* value of L*a*b* colorimetry of at least 5, 10, 15, 20, 25, 30, 35, 40, 45, or 50%.

3. The meat substitute composition of claim 1 or claim 2, wherein at least 50% of the Phycoerythrin degrades when cooked by heating to a temperature of 80°C for at least 4 min.

4. The meat substitute composition of any of the preceding claims, wherein the Phycoerythrin comprises R-Phycoerythrin and/or B-Phycoerythrin.

5. The meat substitute composition of any of the preceding claims, wherein the non-meat protein is a plant-based protein selected from the group consisting of pea protein, soy protein, and wheat protein.

6. The meat substitute composition of any preceding claim, wherein cooking increases a brown color of the meat substitute.

## Patentansprüche

1. Fleischersatzzusammensetzung, umfassend:
ein Nicht-Fleisch-Protein, und
zu 0,01 bis 1 Gew.-% (Trockenbasis) eine Pigmentzusammensetzung, umfassend Phycoerythrin, wobei die Pigmentzusammensetzung dem Fleischersatz vor einem Kochen eine rote Farbe verleiht, die nach dem Kochen verringert ist;
wobei das Phycoerythrin aus Rotalgen erhalten wird, die aus der Gruppe ausgewählt sind, bestehend aus Porphyridium cruentum, Porphyra tenera, Gastroclonium coulteri, Corallina elongate, Phyllophora antarctica, Iridaea cordata und Mischungen davon;
und wobei die Pigmentzusammensetzung mindestens 50 %, 60 %, 70 %, 80 %, 85 %, 90 %, 95 % oder 99 % Phycoerythrin auf Trockengewichtsbasis umfasst.

2. Fleischersatzzusammensetzung nach Anspruch 1, wobei das Kochen das Phycoerythrin abbaut und eine rote Farbe der Pigmentzusammensetzung verringert, entsprechend einer Verringerung des a*-Werts der L*a*b*-Farbmetrik von mindestens 5, 10, 15, 20, 25, 30, 35, 40, 45, oder 50 %.

3. Fleischersatzzusammensetzung nach Anspruch 1 oder 2, wobei mindestens 50 % des Phycoerythrins abgebaut werden, wenn es durch ein Erhitzen auf eine Temperatur von 80 °C mindestens 4 min lang gekocht wird.

4. Fleischersatzzusammensetzung nach einem der vorstehenden Ansprüche, wobei das Phycoerythrin R-Phycoerythrin und/oder B-Phycoerythrin umfasst.

5. Fleischersatzzusammensetzung nach einem der vorstehenden Ansprüche, wobei das Nicht-Fleisch-Protein ein pflanzenbasiertes Protein ist, das aus der Gruppe ausgewählt ist, bestehend aus Erbsenprotein, Sojaprotein und Weizenprotein.

6. Fleischersatzzusammensetzung nach einem der vorstehenden Ansprüche, wobei das Kochen eine braune Farbe des Fleischersatzes verstärkt.

## Revendications

1. Composition de substitut de viande comprenant :
une protéine non carnée, et
0,01 à 1 % en poids (base sèche) d'une composition pigmentaire comprenant de la phycoérythrine, dans laquelle la composition pigmentaire donne une couleur rouge au substitut de viande avant la cuisson, couleur rouge qui diminue après la cuisson ;
dans lequel la phycoérythrine est obtenue à partir d'algues rouges choisies dans le groupe constitué de *Porphyridium cruentum, Porphyra tenera, Gastroclonium coulteri, Corallina elongata, Phyllophora antarctica, Iridaea cordata,* et leurs mélanges ;
et dans laquelle la composition pigmentaire comprend au moins 50 %, 60 %, 70 %, 80 %, 85 %, 90 %, 95 % ou 99 % de phycoérythrine en poids sec.

2. Composition de substitut de viande selon la revendication 1, dans laquelle la cuisson dégrade la phycoérythrine et diminue la couleur rouge de la composition pigmentaire, ce qui correspond à une diminution de la valeur a* de la colorimétrie L*a*b* d'au moins 5, 10, 15, 20, 25, 30, 35, 40, 45 ou 50 %.

3. Composition de substitut de viande selon la revendication 1 ou la revendication 2, dans laquelle au moins 50 % de la phycoérythrine se dégrade lors de la cuisson par chauffage à une température de 80 °C pendant au moins 4 minutes.

4. Composition de substitut de viande selon l'une quelconque des revendications précédentes, dans laquelle la phycoérythrine comprend de la R-phycoérythrine et/ou de la B-phycoérythrine.

5. Composition de substitut de viande selon l'une quelconque des revendications précédentes, dans laquelle la protéine non carnée est une protéine végétale choisie dans le groupe constitué de protéine de pois, protéine de soja et protéine de blé.

6. Composition de substitut de viande selon l'une quelconque revendication précédente, dans laquelle la cuisson augmente la couleur brune du substitut de viande.
